# EUROPEAN PATENT SPECIFICATION

(11) **EP 2 362 704 B1**
(45) Date of publication and mention of the grant of the patent: **18.07.2012**
(21) Application number: 10290081.8
(22) Date of filing: 18.02.2010
(51) Int. Cl.: H04W 72/04

(54) **Relaying scheme with user equipment identification**
Weiterleitungsschema mit Benutzergeräteerkennung
Schéma de relais avec identification de l'équipement utilisateur

(43) Date of publication of application: 31.08.2011
(73) Proprietor: Alcatel Lucent, 75007 Paris (FR)
(72) Inventor: Braun, Volker, 70176 Stuttgart (DE)
(74) Representative: Wetzel, Emmanuelle

(56) References cited:
- EP-A2- 1 921 800
- EP-A2- 1 921 877
- YANG YANG ET AL: "Relay technologies for WiMax and LTE-advanced mobile systems" IEEE COMMUNICATIONS MAGAZINE, IEEE SERVICE CENTER, PISCATAWAY, US LNKD- DOI:10.1109/MCOM.2009.5273815, vol. 47, no. 10, 1 October 2009 (2009-10-01), pages 100-105, XP011283322 ISSN: 0163-6804
- "3rd Generation Partnership Project;Technical Specification Group Radio Access Network;Further Advancements for E-UTRAPhysical Layer Aspects(Release 9)" 3GPP DRAFT; TR 36.814_150, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 1 November 2009 (2009-11-01), XP050389446 [retrieved on 2009-11-13]
- LG-NORTEL: "Control Channel Design for Relay Backhaul Link in FDM+TDM Scheme" 3GPP DRAFT; R1-094453 CONTROL CHANNEL DESIGN FOR RELAY BACKHAUL LINK IN FDM+TDM SCHEME V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388879 [retrieved on 2009-11-02]

## Description

### Field of the Invention

The invention relates to the field of telecommunications, and, more specifically, to transmissions in communications cells having at least one relay node for forwarding data between a base station and one or more user equipments.

### Background

This section introduces aspects that may be helpful in facilitating a better understanding of the invention. Accordingly, the statements of this section are to be read in this light and are not to be understood as admissions about what is in the prior art or what is not in the prior art.

For a better understanding of the background of the technical problem, in the following an overview on the principles of relaying will be given: Relaying is a method to increase coverage and cell edge performance in multi-cell wireless communication networks. A communication scheme with relaying may be as follows: A source sends data packets to the relay node (RN) in a first time slot, and the relay node forwards the data packets to the destination (typically a user equipment, UE) in a later time slot. In the downlink (DL), the source is typically a base station, e.g. an enhanced NodeB, eNB (when the LTE (Long Term Evolution) or LTE advanced standard is used), and the destination is a user equipment served by the communications cell, i.e. the relaying scheme is: eNB -> RN -> UE. In the uplink (UL), the roles of the source and destination are exchanged, i.e. the relaying scheme is: UE -> RN -> eNB. For establishing such a relaying scheme for downlink transmissions, signalling is required to indicate to the relay node to which user equipment(s) received data packet(s) have to be forwarded. As used herein, a data packet refers to a packet of data which is typically transmitted over a transport channel, e.g. a transport block or a Media Access Control, MAC, protocol data unit, PDU.

One of the relay types considered for the 3GPP LTE-Advanced standard is the so-called Type II-Relay. A "type II" relay node is an in-band relaying node which typically has the following features:
- It does not have a separate Physical Cell ID and thus does not create any new cells.
- It is transparent to Release-8 UEs; i.e. a Rel-8 UE is not aware of the presence of a type 2 relay node.
- It can transmit on the Physical Downlink Shared Channel, PDSCH.
- At least, it does not transmit CRS (cell specific reference signals) and does • not transmit on the Physical Downlink Control Channel, PDCCH.

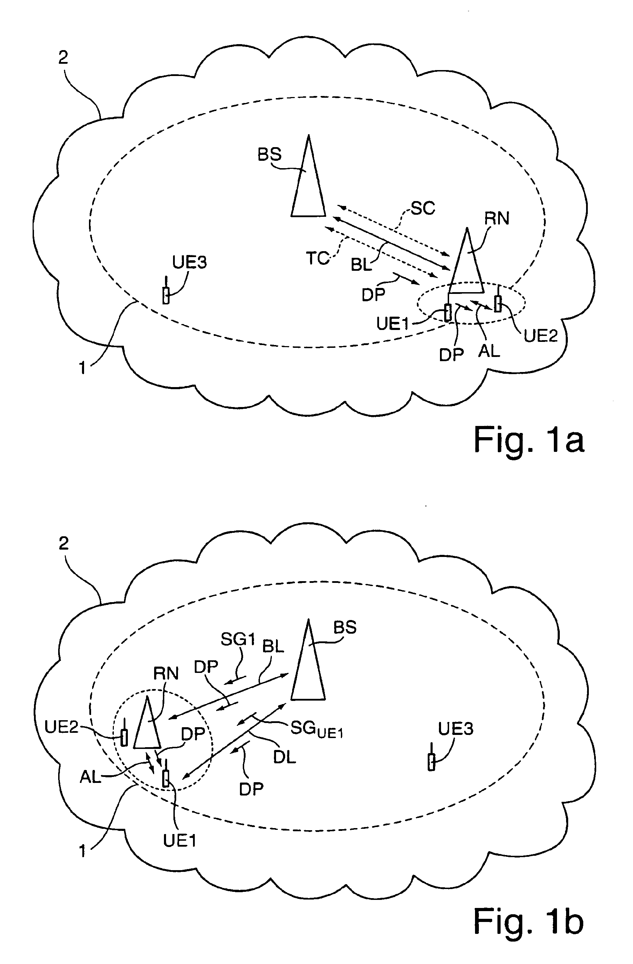

The relaying may be performed either in a non-cooperative or a cooperative way, where cooperation in this context is to be interpreted in that an initial transmission of a data packet transmitted by a base station to a user equipment can be combined with a retransmission of a data packet transmitted from a relay node to the user equipment, as will be explained in the following with respect to **Fig. 1a** and **Fig. 1b**.

Fig. 1 a shows a communications cell **1** of a wireless communications network **2** which in the present example is in compliance with the LTE-advanced standard. The communications cell 1 has a base station **BS**, in a network 2 of the LTE type also being referred to as eNodeB. The base station **BS** serves a plurality of user equipments **UE1** to **UE3**. As the first and second user equipment UE1, UE2 shown in Fig. 1a are at the edge of the communications cell 1 and thus almost out of the range of the radio transmissions provided by the base station BS, a relay node **RN** is arranged in the cell 1, the relay node RN being used for forwarding traffic from the base station BS to the first and second user equipment UE1, UE2 and vice versa. For this purpose, a bidirectional access link **AL** is established between the relay node RN and e.g. the first user equipment UE1. Likewise, a backhauling link **BL** is established between the base station BS and the relay node RN. In the non-cooperative forwarding scheme of Fig. 1a, no direct link is established between the base station BS and the user equipments UE1, UE2 served by the relay node RN, at least for initial transmissions of data packets. In contrast thereto, the third user equipment UE3 which has better channel quality to the base station BS is served by the latter on a direct link DL.

In the communications cell 1 of Fig. 1a, a non-cooperative relaying scheme integrated into Hybrid Automatic Repeat Request, HARQ, operation may be established in the following way (for DL transmissions): The base station BS sends a data packet **DP** to the relay node RN over a transport channel **TC** of the backhauling link BL (but not directly to the user equipments UE1, UE2).

The relay node RN decodes the data packet DP and reports ACK/NACK to the base station BS. If ACK was reported to the base station BS, the base station BS will send a downlink scheduling grant for retransmission of the data packet DP over a signalling channel **SC**, while in the same sub-frame the relay node RN forwards the data packet DP to e.g. the first user equipment UE1, and possibly the base station BS simultaneously re-transmits the data packet DP over a direct link (not shown in Fig. 1 a) to the first user equipment UE1.

In a cooperative scheme as represented in Fig. 1b, the first transmission of a data packet DP is performed from the base station BS simultaneously to the relay node **RN** over the backhauling link BL and also over a direct link **DL** established between the base station BS and the first user equipment UE1 of the present example. Typically, the relay node RN will successfully decode the received data packet DP, whereas the first user equipment UE will fail to decode the data packet DP due to the lower transmission quality on the direct link DL. When the downlink transmissions are integrated into HARQ operation, the first user equipment UE1 will report NACK to the base station BS and to the relay node RN. The relay node RN then retransmits the data packet DP at some time later, possibly simultaneously with the base station BS. The first user equipment UE1 will then receive the data packet DP correctly, as the channel quality on the access link AL between the relay node RN and the user equipment UE1 is significantly better than on the direct link DL.

For application in DL (and UL), the cooperative scheme of Fig. 1b requires that the relay node RN detects the DL (and UL) scheduling grants (and DL ACK/NACK) for the user equipments UE1, UE2 and the UL ACK/NACK transmitted by the user equipments UE1, UE2. In the following, only the downlink case will be considered for both relaying schemes.

It will be understood that the relay node RN of Figs. 1a, b may serve more than one user equipment UE1, i.e. data packets destined to a second user equipment UE2 may be forwarded to the second user equipment UE2 in an analogous way as described above. Consequently, additional signalling means are required, as a data packet DP that is destined e.g. for the first user equipment UE1 is first transmitted to the relay node RN. As the relay node RN serves two user equipments UE1, UE2 in the present example, the relay node RN needs to identify the specific user equipment (in the present case UE1) to which the data packet DP has to be forwarded.

A base station with the features of the preamble of claim 1 is known from EP 1 921 877 A2.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

A first aspect of the invention relates to a base station for a communications cell of a wireless network, the base station being adapted for generating a scheduling grant to be transported from the base station to a relay node of the communications cell, the base station being further adapted for including a user equipment identifier into the scheduling grant, the user equipment identifier being indicative of a user equipment to which a data packet to be transmitted by the base station should be forwarded by the relay node. The base station is adapted for generating the scheduling grant by encoding a relay node identifier for identifying the relay node together with the user equipment identifier into a check sequence, preferably a cyclic redundancy check, CRC, sequence, of a payload of the scheduling grant, the encoding being preferably performed by scrambling of the check sequence.

According to the invention, it is proposed to transfer a user equipment identifier from the base station to the relay station, the user equipment identifier allowing the relay station to forward the data packet to the correct user equipment. The user equipment identifier is included (e.g. multiplexed) in a scheduling grant which will be transported from the base station to the relay station anyhow, such that the additional signaling overhead can be minimized. The user equipment identifier may - but does not necessarily have to - correspond to the so called Cell-Radio Network Temporary Identifier, C-RNTI (having 16 bits) of the user equipment, which is commonly used for identifying physical entities in a communications cell of the LTE standard.

The base station generates a check sequence from the payload of the scheduling grant and then encodes the check sequence both with the user equipment identifier and the relay node identifier, typically by scrambling the check sequence, using e.g. a modulo-2 addition. In particular when both the user equipment identifier and the relay node identifier have a length which is equal to the length of the check sequence, care should be taken that the subsequent scrambling with both identifiers does not generate a valid user equipment identifier of another user equipment.

In one improvement, the relay node identifier and the user equipment identifier are encoded into different bits of the check sequence. In such a way, the scrambling (e.g. modulo-2 addition) of the check sequence with the relay node identifier and with an identifier of a specific one of the users cannot result in a valid user equipment identifier of another user, due to the encoding into different bits of the check sequence. This can be realized by sparing e.g. 3-4 bits for the identification of the relay node in the binary representation of the (then common) identifier (e.g. the least significant bits or any other tuple of bits of the C-RNTI). In this case, the initiation procedure of the relay node RN will be able to allocate a respective identifier (e.g. C-RNTI) to the relay node RN, e.g. by re-configuration of the identifiers (C-RNTis) used in the cell.

In a further embodiment, the scheduling grant is included in a transport block containing data packets to be forwarded to at least one user equipment over a transport channel or in a data control information, DCI, block to be transmitted to the relay node over a signaling channel.

In the first case, the respective user equipment identifier is multiplexed into the payload of a transport block transmitted to the relay node. An advantage of this solution is that data packets for multiple user equipments may be multiplexed / included into one and the same transport block for the relay node which may save some shared channel resources and signalling load (less scheduling grants) in the base station of the cell. The transport block containing the scheduling grant may e.g. be transmitted over a Physical Downlink Shared Channel, PDSCH.

In the second case, inclusion of the user equipment identifier into the scheduling grant may require the definition of new data control information (DCI) formats specifically for scheduling grants sent to the relay node. Such DCI types could be introduced e.g. into the LTE standard or be used in a proprietary way by using appropriate rate matching (without causing negative impact on Release 8 user equipment as a user equipment would not receive such a scheduling grant). The DCI comprising the scheduling grant may be transmitted e.g. over a Physical Downlink Control Channel, PDCCH.

In a further embodiment, a length of the user equipment identifier included into the scheduling grant is chosen in dependence of a maximum number of user equipments served by the relay node. In this way, the length of the user equipment identifier may be adapted to the (maximum) number of users which may be served by the relay station. For instance, when the relay station is adapted to serve a maximum number of 64 users, it is sufficient to include a user equipment identifier having 6 bits into the scheduling grant. This is a considerable reduction as compared to the length of identifiers typically used in a cell, being e.g. 16 bits in case of the C-RNTI used in the LTE standard.

A second aspect of the invention is realized in a relay node for forwarding data packets received from a base station of a communications cell to a user equipment arranged in the communications cell, the relay node being adapted for deriving a user equipment identifier indicative of the user equipment to which the data packets should be forwarded from a scheduling grant received from the base station. The user equipment identifier is comprised in a received check sequence, preferably a cyclic redundancy check, CRC, sequence, of a payload of the received scheduling grant together with a relay node identifier for identifying the relay node. The relay node is further adapted for: a) generating a check sequence, preferably a CRC sequence, from the payload of the received scheduling grant; b) encoding a relay node identifier of the relay node and a user equipment identifier selected from a plurality of user equipment identifiers associated with the relay node into the check sequence, preferably by scrambling the check sequence; and c) comparing the encoded check sequence with the received check sequence for deciding if the data packet has to be forwarded to the user equipment associated with the selected user equipment identifier. As indicated above, the user equipment identifier may be included in a scheduling grant which has been received from the base station via a signalling channel or via a transport channel.

The above procedure, respectively those parts thereof with regard to the selection of a particular user equipment will be repeated for an overall number (list) of user equipments which are associated with the relay node. If the outcome of the comparison is that the data packet is not destined to any of the user equipments of the list, the relay station will discard the data packet.

A further aspect of the invention relates to a communications cell, comprising: a base station of the type described above and at least one relay node of the type described above.

In one embodiment, the communications cell further comprises a user equipment served by the relay node, and the communications cell is adapted for performing cooperative relaying by: simultaneously transmitting a data packet from the base station to the relay node and to a user equipment served by the relay node, and retransmitting the data packet from the relay node to the user equipment (possibly simultaneously with retransmitting the data packet from the base station to the user equipment). The cooperative scheme is based on the fact that the relay station receives the information about the user equipment to which the data packet is destined in a scheduling grant transmitted by the base station (layer 1 signaling).

Different possibilities for implementing the cooperative relaying do exist:

In one embodiment, the user equipment does not confirm reception of an initial transmission of the data packet received from the base station, as the user equipment expects a retransmission from a relay node. This scheme requires that the user equipment is informed that it receives retransmissions of data packets from the relay node. This information may be provided in that the base station reports the relay node identifier (e.g. C-RNTI) to the user equipment, e.g. by means of RRC signaling.

In an alternative embodiment, both the user equipment and the relay node simultaneously confirm reception of the data packet using different uplink control channel resources. In this case, two different scheduling grants may be transmitted to the relay station and to the user equipment, respectively. The scheduling grant transmitted to the user equipment may be the same as in the (LTE Release 8) standard. As in the LTE standard, the uplink control channel resources are tagged to the control channel element for transmitting downlink grants, when using two downlink scheduling grants, the base station will be able to distinguish the confirmation/non-confirmation of reception sent from the relay node and the user equipment, respectively.

In one improvement, the uplink control channel resources are tagged to a control channel element for transmitting downlink grants, the tagging of the uplink control channel resources to the control channel element which are performed by the relay node and by the user equipment being different. In this case, it is proposed that the coupling between the uplink and the downlink which is foreseen in the standard may be modified, typically by the relay node. In such a way, the confirmation/non-confirmation sent by the relay node may be distinguished from the one sent by the user equipment, although only a single downlink scheduling grant is transmitted both to the relay station and the user equipment.

Alternatively, as indicated above, an additional scheduling grant may be transmitted from the base station to the user equipment. For the case that the user equipment should not confirm reception of the data packet received from the base station, the additional scheduling grant preferably indicates that the relay node will perform a retransmission of the data packet.

A further aspect of the invention relates to a communications network comprising at least one communications cell as described above. The communications network may in particular be in compliance with the LTE or LTE advanced standard, possibly being modified in the way described above.

Further features and advantages are stated in the following description of exemplary embodiment, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Figs. 1a,b**: show schematic diagrams of an embodiment of a communications cell implementing a non-cooperative and a cooperative relaying scheme,
- **Fig. 2**: shows a schematic structure of a data control information, DCI, block to be transmitted over a signaling channel,
- **Fig. 3**: shows a schematic structure of a transport block containing data packets to be transmitted over a transport channel,
- **Fig. 4**: shows an encoding procedure for encoding a user equipment identifier and a relay node identifier into a scheduling grant, and
- **Fig. 5**: shows a flow diagram of a decoding procedure for the scheduling grant of Fig. 4.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

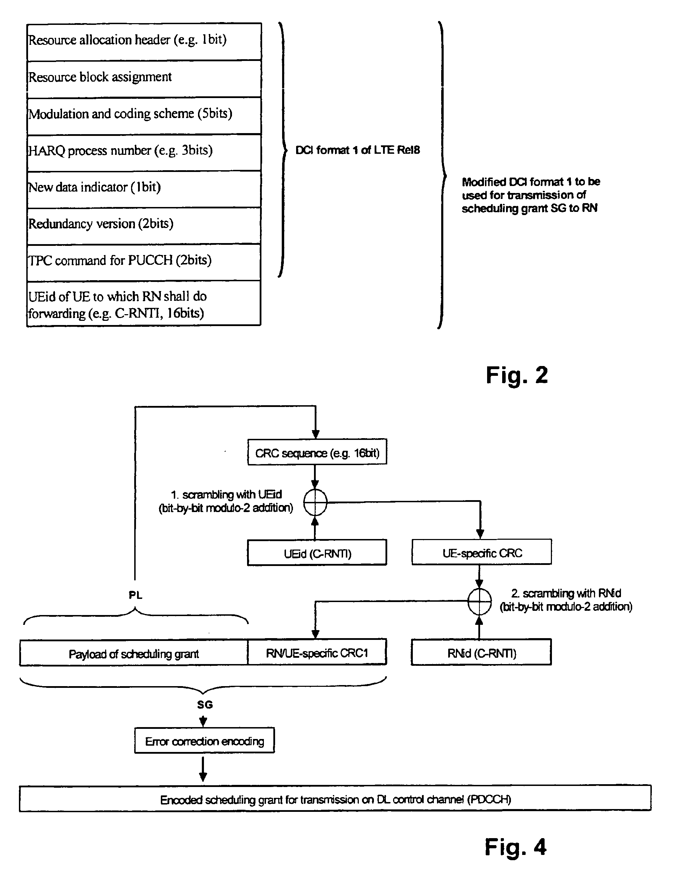

As described with respect to Figs.1a,b above, there is a need to provide a user equipment indicator from the base station BS to a respective relay node RN (in particular a type II relay), such that the relay node RN may identify the user equipment UE1, UE2 to which data packets DP should be forwarded. For the transfer of the user equipment indicator there are different options, as will be indicated below:
In a first option, as shown in **Fig. 2****,** a user equipment identifier **UEid** is multiplexed/appended to the payload of a scheduling grant **SG** which is transmitted to the relay node RN over a signalling channel SC on the backhauling link BL. In the present example, the payload of the scheduling grant SG comprises a data control information block **DCI** (format 1, as described in the LTE standard, cf. § 5.3.3 of 3GPP TS 36.212) to which the user equipment identifier UEid is appended. This increases the payload of the scheduling grant (e.g. by 16bits when a C-RNTI is used as a user equipment identifier UEid). As one option, in selected ones of the scheduling grants SG, the C-RNTI may alternatively be chosen to be identical to the C-RNTI used for identifying the relay node RN. In this case, signaling between the base station BS and the relay node RN may be performed by using the scheduling grant SG.

In LTE, the addition of the user equipment identifier UEid may require the definition of new data control information (DCI) formats for scheduling grants sent to the relay node RN. Such DCI types could be introduced into the LTE standard or be used in a proprietary way by using appropriate rate matching, without causing negative impact on Release 8 user equipment (as the user equipment typically does not receive such a scheduling grant).

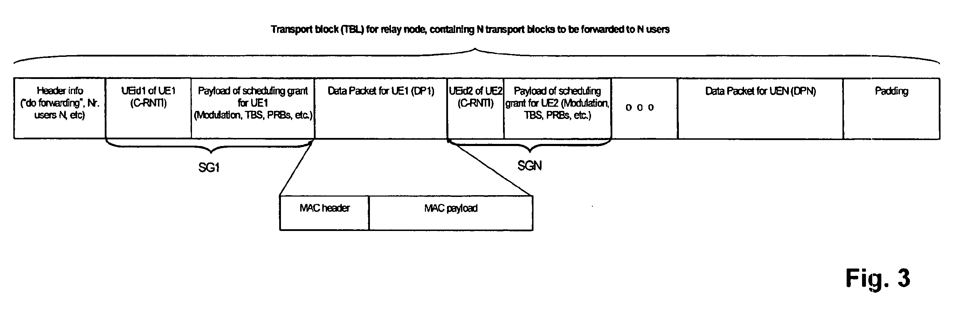

In a second option, the user equipment identifier UEid is multiplexed into (included into) the payload of a transport block **TBL** (cf. **Fig. 3**) which is transmitted to the relay node RN over a transport channel TC. An advantage of this solution is that several individual user-specific data packets **DP1** to **DPN** for multiple user equipments UE1, UE2, can be multiplexed into a single transport block TBL for the relay node RN. Thus, some shared channel resources and signalling load may be saved in the base station BS of the cell 1, resulting in less scheduling grants.

In the following, the schematic structure of the transport block (or MAC PDU) TBL, containing a number N (N>=1) of user-specific data packets DP1 to DPN to be forwarded to N users will be described in greater detail with reference to Fig. 3:
A MAC header field informs the relay node RN that this transport block TBL contains a number N of user-specific data packets DP1 to DPN to be forwarded to N user equipments, e.g. by using one of the reserved indices (binary 01011-11011) of the Logical Channel ID field of the LTE MAC header, see § 6.2.1 of 3GPP TS 36.321. This field may include further information how to extract the N user-specific data packets DP1 to DPN to be forwarded to the N user equipments, e.g. size(s) of the scheduling grant fields SG1 to SGN.

The transport block TBL further comprises user equipment identifiers UEid1 to UEidN (typically in 16 bit C-RNTI format) of the N user equipments to which the user-specific data packets DP1 to DPN are destined. Also, scheduling information (i.e. information that is typically included in the payload of a scheduling grant) fields may be included into the transport block TBL to instruct the relay node RN how to format the user-specific data packets DP1 to DPN for forwarding to the user equipments. Such information may include e.g. modulation scheme, transport block size (TBS), physical resource blocks (PRBs) to be allocated, and possibly further parameters such as HARQ process number, redundancy version parameters etc. Part of this scheduling information could alternatively a priori be agreed between the base station BS and the relay node RN, e.g. the relay node RN could use the same modulation scheme for forwarding as the modulation scheme of the transport block received by the relay node RN (in this case, the N user equipments would receive the forwarded data packets with the same modulation scheme), etc.

The transport block TBL also includes the payloads of the N user-specific data packets DP1 to DPN (MAC PDUs containing MAC PDU header and payload, see §6.2.1 of 3GPP TS 36.321) to be forwarded to the N user equipments. Also, some padding bits may be needed to match the size of the transport block TBL received by the relay node RN to a set of supported transport block sizes.

When the user equipment identifiers UEid1 to UEidN are included into the scheduling grants SG1 to SGN of the transport block TBL of Fig. 3 or when a user equipment identifier UEid is included into the DCI block of the scheduling grant SG of Fig. 2, its length need not correspond to the length of the identifiers usually applied in a cell (their length depending on the maximum number of users which can be served by the cell). Rather, the length of the user equipment identifier included into the scheduling grant may be chosen in dependence of a maximum number of user equipments served by the relay node RN. In this way, the length of the user equipment identifier may be adapted to the (maximum) number of users which can be served by the relay node RN. For instance, when the relay node RN is adapted to serve a maximum number of 64 users, it is sufficient to include a user equipment identifier having 6 bits into the scheduling grant SG, SG1 to SGN. This is a considerable reduction as compared to the length of identifiers typically used in a cell, being e.g. 16 bits in case of the C-RNTI used in the LTE standard. The reduced length user equipment identifiers may be defined by the base station and be signaled to the relay node e.g. during the user equipment association procedure.

As an alternative to the explicit signaling of the user equipment identifier UEid as described above, implicit layer 1 signaling may be used. For a better understanding of this approach, in the following, a short introduction of signaling performed in a LTE network 1 will be given:
In LTE, the scheduling of transport blocks TBLs is typically indicated to a user equipment UE1, UE2 by using scheduling grants on the downlink control channel (PDCCH). Within the payload of a scheduling grant, all information is given to a user equipment UE1, UE2 that is needed to detect (in downlink on PDSCH) or transmit (in uplink on PUSCH) the transport format.

The addressing principle for scheduling grants is as follows: The base station BS computes a cyclic redundancy check, CRC, sequence (e.g. 16bit CRC) from the payload of a scheduling grant. The computed CRC check sequence is scrambled (e.g. modulo-2 addition) with the identifier (C-RNTI) of the user equipment UE1, UE2 for which the data packet is destined. The scrambled CRC check sequence is then appended to the payload, prior to error correction encoding. In a subsequent step, the base station BS sends the encoded scheduling grant to the user equipment, e.g. UE1, on the PDCCH. The user equipment UE1 decodes a received scheduling grant, computes a CRC sequence from the received payload and scrambles the obtained CRC sequence with its own user equipment identifier. The user equipment UE1 then compares the computed CRC sequence with the received CRC sequence. If both CRC sequences are identical, the user equipment UE1 accepts the scheduling grant from the base station BS, otherwise the scheduling grant is discarded by the user equipment UE1 and the procedure is repeated with another received scheduling grant (also known as blind search).

In view of the above, the proposed solution for the implicit transport of the user equipment identifier is as follows: It is proposed to incorporate a further scrambling of the CRC sequence with an identifier of the relay node RN. In the following, it will be assumed that the relay node RN is assigned an identifier from the base station BS during the initiation process. In particular, it is assumed that the relay node RN will be assigned an identifier in the form of an C-RNTI, in the same manner as a user equipment UE1 to UE3. In such a way, the base station BS may establish a bidirectional signaling link by using PDSCH and PUSCH on the backhauling link BL.

In the following, the procedure described above will be explained in greater detail with respect to **Fig. 4**:
In a first step, the base station BS computes a CRC check sequence (e.g. 16bit CRC) from a payload **PL** of a scheduling grant SG. The computed CRC check sequence is then scrambled (e.g. using a modulo-2 addition) with the user equipment identifier UEid (e.g. of the C-RNTI type) of the user equipment for which the corresponding data packet is destined (this may be referred to as user equipment specific scrambling or first scrambling). The scrambled CRC sequence is subsequently scrambled (e.g. by modulo-2 addition) a second time with the relay node identifier RNid (also of the C-RNTI type) of the relay node RN which shall do the forwarding of the data packet to the user equipment (also referred to as relay node specific scrambling or second scrambling). In a further step, the twice scrambled CRC check sequence **CRC1** is then appended to the payload PL of the scheduling grant SG prior to error correction encoding. In a further step, the base station BS sends the encoded scheduling grant SG to the relay node RN via the PDCCH.

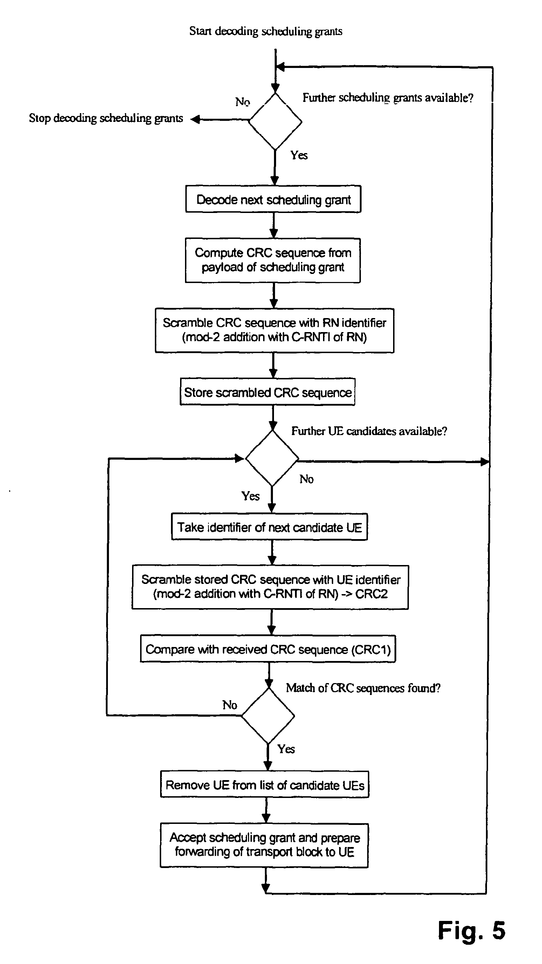

Referring now to **Fig. 5****,** the relay node RN decodes the received scheduling grant SG, computes a CRC sequence from the received payload PL and scrambles the obtained CRC sequence with its relay node identifier RNid and subsequently stores the CRC sequence. The relay node RN then scrambles the stored CRC sequence a second time with a user equipment identifier UEid of one of the user equipments for which the relay node RN shall do forwarding of data packets, and the relay node RN then compares the twice scrambled sequence **CRC2** thus obtained with the received sequence CRC1.

If both CRC sequences CRC1, CRC2 are identical, the relay node RN accepts the scheduling grant SG from the base station BS that instructs the relay node RN to do forwarding of data packets to the user equipment which is characterized by the user equipment identifier UEid used for the second scrambling of the CRC sequences CRC1, CRC2. Otherwise, for the stored (once scrambled) CRC sequence, the second scrambling is repeated with a user equipment identifier UEid of another user equipment to which the relay node RN shall do forwarding of data packets, until a match in CRC sequences is found or until all user equipment identifiers of user equipments for which the relay node RN shall do forwarding of data packets have been checked. It will be understood that a user equipment is considered not to be a suitable candidate for a scheduling grant SG and thus for the check as described above if the relay node RN already has identified a scheduling grant for this user equipment in the same sub-frame.

If for a particular scheduling grant SG, no match in CRC sequences can be found, the scheduling grant SG is discarded by the relay node RN and the procedure is repeated with another received scheduling grant.

Regarding the above, one skilled in the art will readily appreciate that the order in which the first and second scrambling are performed during the encoding is arbitrary, i.e. the scrambling may first be performed with the relay node identifier RNid and subsequently with the user equipment identifier UEid. For the decoding, it is advantageous to first perform the scrambling with the relay node identifier RNid and to store the result, thus further reducing the computational complexity of the algorithm. In this way, during the encoding procedure, only a single additional 16bit bit-by-bit modulo-2 addition is required per scheduling grant SG. During the decoding procedure, only a single additional 16bit bit-by-bit modulo-2 addition and an additional 16-bit comparison is required for each candidate user equipment per scheduling grant SG.

One skilled in the art will appreciate that with the proposed solution, it needs to be avoided that the modulo-2 addition of the relay node identifier RNid (e.g. of the C-RNTI type) and a user equipment identifier UEid of any of the users will result in a valid user identifier (also of the C-RNTI type) of another user equipment. This may be avoided by reserving e.g. 3 to 4 bits of the overall length of the identifier (which corresponds to the length of CRC sequence, being 16 bit in the present example) for the identification of the relay node RN (or of relay nodes in general) within the binary representation of the C-RNTI (e.g. the least significant bits or any other tuple of bits). In this case, the initiation procedure of the relay node RN shall be able to allocate a respective relay node identifier to the relay node RN, e.g. by re-configuration of the identifiers (e.g. C-RNTIs) used in the cell 1.

With the proposed PDCCH signaling solutions, the non-cooperative Type II relaying scheme and the cooperative relaying scheme which have been described with reference to Fig. 1a and Fig. 1b become very similar. Therefore, the relay node RN can easily be configured to use one of the schemes, either for all user equipments UE1, UE2 or selectively in dependence of the user equipment UE1, UE2. In particular, these schemes may be compatible with Release 8 user equipments. A respective configuration parameter (or multiple user equipment-specific configuration parameters) may be signaled from the base station BS to the relay node RN during the relay initiation (or user equipment association) procedure.

The cooperative relaying scheme may be preferable in scenarios with a reasonably good direct link DL, so that the direct link DL and the access link AL are rather balanced and allow a good cooperation, or in scenarios with a rather time-invariant backhauling link BL (e.g. in a line-of-sight scenario). The non-cooperative relaying scheme may in particular be used for coverage expansion (weak direct link) or if the relay node RN is positioned such that the backhauling link BL has weak line-of-sight propagation components (e.g. strong Rayleigh fading component requiring fast ACK/NACK signaling on the backhauling link BL).

Also, the proposed PDCCH signaling solutions described above enable a novel type of cooperative Type II relaying scheme for application in downlink, not compatible with Release 8 user equipments. It requires that a respective user equipment UE1, UE2 is informed that it receives retransmissions of transport blocks / data packets DP from the relay node RN, and this may be achieved in that the base station BS reports the relay node identifier RNid (e.g. C-RNTI) to the user equipment UE1, UE2 by means of RRC signaling.

Schematically, this scheme may work as follows:
- in a first step, the base station BS sends a data packet DP (transport block) to the first user equipment UE1 and the relay node RN, where the downlink scheduling grant uses a CRC sequence CRC1 that is specific for the RN-UE combination (scrambling with UE and RN identifiers as described above) -- or alternatively a payload of the downlink scheduling grant **SG1** explicitly includes the user equipment identifier as illustrated in Fig. 1b and the downlink scheduling grant SG1 uses a CRC sequence CRC1 that is specific for the RN (scrambling with RN identifier as described above);
- the user equipment UE1 attempts to decode the data packet DP, but typically fails (CRC FAIL). However, the user equipment UE1 will not report ACK/NACK to the base station BS, as the user equipment UE1 is expecting a further retransmission from the relay node RN;
- Simultaneously, the relay node RN successfully decodes the data packet DP, and reports ACK to the base station BS;
- the relay node RN then retransmits the data packet DP at some time later, possibly simultaneously with the base station BS;
- the user equipment UE1 receives the retransmitted data packet DP correctly, and reports ACK to the base station BS.

This relaying scheme as described above combines the advantages of the first and second Type II relaying schemes describe above:
- Cooperative relaying allows the user equipment UE1 to soft combine the initial transport block / data packet DP with the retransmitted transport block(s) / data packet(s), i.e. results in improved error rate performance / enhanced data rates;
- The base station BS receives ACK/NACK from the relay node RN for the initial data packet which improves reliability of the relaying scheme;
- the signalling between the relay node RN and the base station BS is facilitated in subframes containing ACK/NACK reported by the relay node RN to the base station BS (as relay node RN is in Transmit(Tx) mode on the UL carrier).

It will be understood that this novel cooperative Type II relaying scheme could also be realized by using two scheduling grants SG1, SG_{UE1} (cf. Fig. 1b) to indicate the very same initial transmission of a transport block / data packet DP:
- a first scheduling grant SG1 which is transmitted to the relay node RN includes the user equipment identifier UEid (explicitly or implicitly) to which the data packet(s) DP are destined;
- a second scheduling grant SG_{UE1} transmitted to the user equipment UE1 includes at least one bit to indicate that the user equipment UE1 will receive retransmissions of the data packet DP from the relay node RN (possibly also the relay node identifier RNid could be included), so that the user equipment UE1 shall NOT send uplink ACK/NACK in response to the received initial transmission.

Typically, however, using two scheduling grants SG1, SG_{UE1} wastes radio resources in the donor cell, and the proposed implicit signalling scheme using a CRC that is specific for the relay node RN - user equipment UE combination will be more efficient.

A similar scheme as above can also be designed in a way that is compatible with Release 8 user equipments UE1, UE2. Again, two scheduling grants SG1, SG_{UE1} are used to indicate the very same initial data packet:
- a first scheduling grant SG1 transmitted from the base station BS to the relay node RN includes the user equipment identifier UEid (explicitly or implicitly) to which the data packet(s) DP are destined;
- a second scheduling grant SG_{UE1} transmitted to the user equipment UE1 is as in Release 8.

This scheme may work as follows:
- the base station BS sends a data packet DP both to the first user equipment UE1 and the relay node RN, where the DL scheduling grant uses a CRC that is specific for the RN-UE combination (scrambling with UE and RN identifiers) ― or alternatively a payload of a DL scheduling grant explicitly includes a user equipment identifier UEid (C-RNTI) as illustrated in Fig. 2;
- the user equipment UE1 attempts to decode the data packet DP, but typically fails (CRC FAIL). In this case, the user equipment UE1 will report ACK/NACK to the base station BS as in Release 8;
- Simultaneously, the relay node RN successfully decodes the data packet DP, and reports ACK to the base station BS;
- the base station BS simultaneously receives two ACK/NACKs, one from the relay node RN and one from the user equipment UE1, in response to the initial transmission, and according to LTE Rel8 these ACK/NACKs can be distinguished by the base station BS (eNodeB) in that they use different UL control channel resources (these resources are tagged to the control channel element for transmitting DL grants), cf. §10.1 of 3GPP TS36.213;
- the relay node RN retransmits the data packet DP at some time later, possibly simultaneously with the base station BS;
- the user equipment UE1 is receiving the retransmitted data packet DP correctly, and reports ACK to the base station BS.

In an alternative variant, such a cooperative type II relaying scheme, where both the relay node RN and the user equipment UE1 report ACK/NACK in response to the initial DL transmission can also be realized when using a single scheduling grant with implicit signalling of the RN-UE combination (CRC scrambled with relay node identifier RNid and user equipment identifier UEid) - or alternatively when using a single scheduling grant where a payload of the downlink scheduling grant **SG1** explicitly includes the user equipment identifier as illustrated in Fig. 1b and the downlink scheduling grant SG1 uses a CRC sequence CRC1 that is specific for the RN (scrambling with RN identifier as described above) -- by using a different UL control channel element for the ACK/NACK reported by the relay node RN. This can be realized e.g. by using a modified rule in the relay node RN to define how resources for uplink ACK/NACK are tagged to the channel element used for the DL scheduling grant.

In the above description, the following constraints/assumptions with respect to a Type II relay have been made:
- Scheduling is under control of the base station BS (central scheduling)
- The relay node RN transmits / receives in different sub-frames on a carrier (not mandatory)
- the user equipment UE1, UE2 is located in a cell 1 of the base station BS (able to exchange signaling with the base station BS), and the relay node RN in turn is also within the cell 1 of the base station BS (and thus also able to exchange signaling with the base station BS);
- it has been assumed that the relay node RN is a priori informed by the base station BS about the cell ID and all other relevant cell-specific radio parameters such as frame timing, system bandwidth, number of transmit antennas, allocation and generation of signals etc.;
- it is also assumed that the relay node RN has a-priori received information on all user equipment-specific radio parameters required to do forwarding of data packets for the user equipment UE1, UE2, e.g. user equipment identifier (RNTI), resource allocations, sequence generation parameters, etc.

In summary, in the way described above, efficient use of relaying in cells of wireless communication networks may be provided, increasing cell throughput and keeping error rates for transported data packets low.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Base station (BS) for a communications cell (1) of a wireless network (2), the base station (BS) being adapted for generating a scheduling grant (SG, SG1 to SGN) to be transported from the base station (BS) to a relay node (RN) of the communications cell (1),
the base station (BS) being further adapted for including a user equipment identifier (UEid, UEid1 to UEidN) into the scheduling grant (SG, SG1 to SGN), the user equipment identifier (UEid, UEid1 to UEidN) being indicative of a user equipment (UE1, UE2) to which a data packet (DP) to be transmitted by the base station (BS) should be forwarded by the relay node (RN)
**characterized in that**
the base station (BS) is adapted for generating the scheduling grant (SG) by encoding a relay node identifier (RNid) for identifying the relay node (RN) together with the user equipment identifier (UEid) into a check sequence, preferably a cyclic redundancy check sequence (CRC1), for a payload (PL) of the scheduling grant (SG), the encoding being preferably performed by scrambling of the check sequence (CRC1).

2. Base station according to claim 1, wherein the relay node identifier (RNid) and the user equipment identifier (UEid) are encoded into different bits of the check sequence (CRC1).

3. Base station according to claim 1, wherein the scheduling grant (SG1 to SGN) is included in a transport block (TBL) containing data packets (DP1 to DPN) to be forwarded to at least one user equipment (UE1, UE2) over a transport channel (TC) or in a data control information (DCI) block of a scheduling grant (SG) to be transmitted to the relay node (RN) over a signaling channel (SC).

4. Base station according to any one of the preceding claims, wherein a length of the user equipment identifier (UEid) included into the scheduling grant (SG, SG1 to SGN) is chosen in dependence of a maximum number of user equipments (UE1, UE2) served by the relay node (RN).

5. Relay node (RN) for forwarding data packets (DP) received from a base station (BS) of a communications cell (1) to a user equipment (UE1, UE2) arranged in the communications cell (1), the relay node (RN) being adapted for deriving a user equipment identifier (UEid) indicative of the user equipment (UE1) to which the data packets (DP) should be forwarded from a scheduling grant (SG, SG1 to SGN) received from the base station (BS),
**characterized in that**
the user equipment identifier (UEid) is comprised in a received check sequence, preferably a cyclic redundancy check sequence (CRC1), of a payload (PL) of the received scheduling grant (SG) together with a relay node identifier (RNid) for identifying the relay node (RN), and **in that** the relay node (RN) is further adapted for:
a) generating a further check sequence, preferably a CRC sequence (CRC2), from the payload (PL) of the received scheduling grant (SG),
b) encoding a relay node identifier (RNid) of the relay node (RN) and a user equipment identifier (UEid) selected from a plurality of user equipment identifiers (UEid1 to UEidN) associated with the relay node (RN) into the further check sequence (CRC2), preferably by scrambling the further check sequence (CRC2), and
c) comparing the encoded further check sequence (CRC2) with the received check sequence (CRC1) for deciding if the data packet (DP) has to be forwarded to the user equipment (UE1) associated with the selected user equipment identifier (UEid).

6. Communications cell (1), comprising:
a base station (BS) according to any one of claims 1 to 4, and
at least one relay node (RN) according to claim 5.

7. Communications cell (1) according to claim 6, further comprising a user equipment (UE1) served by the relay node (RN), the communications cell (1) being adapted for:
simultaneously transmitting a data packet (DP) from the base station (BS) to the relay node (RN) and to the user equipment (UE1), and
retransmitting the data packet (DP) from the relay node (RN) to the user equipment (UE1).

8. Communications cell according to claim 7, wherein the user equipment (UE1) does not confirm reception of the data packet (DP) received from the base station (BS).

9. Communications cell according to claim 7, wherein both the user equipment (UE1) and the relay node (RN) simultaneously confirm reception of the data packet (DP) using different uplink control channel resources.

10. Communications cell according to claim 9, wherein the uplink control channel resources are tagged to a control channel element for transmitting downlink grants, the tagging of the uplink control channel resources to the control channel element which are performed by the relay node (RN) and by the user equipment (UE1) being different.

11. Communications cell according to any one of claims 6 to 10, further adapted for: transmitting an additional scheduling grant (SG_{UE1}) from the base station (BS) to the user equipment (UE1), preferably indicating that the relay node (RN) will perform a retransmission of the data packet (DP).

12. Communications network (2), comprising at least one communications cell (1) according to any one of claims 6 to 11.

## Patentansprüche

1. Basisstation (BS) für eine Kommunikationszelle (1) eines drahtlosen Netzwerks (2), wobei die Basisstation (BS) dazu ausgelegt ist, eine von der Basisstation (BS) bis zu einem Relaisknoten (RN) der Kommunikationszelle (1) zu transportierende Scheduling-Bewilligung (SG, SG1 bis SGN) zu erzeugen,
wobei die Basisstation (BS) weiterhin dazu ausgelegt ist, eine Benutzerendgerätkennung (UEid, UEid1 bis UEidN) in die Scheduling-Bewilligung (SG, SG1 bis SGN) einzufügen, wobei die Benutzerendgerätkennung (UEid, UEid1 bis UEidN) für ein Benutzerendgerät (UE1, UE2), an welches ein von der Basisstation (BS) zu übertragendes Datenpaket (DP) von dem Relaisknoten (RN) weitergeleitet werden soll, indikativ ist,
**dadurch gekennzeichnet, dass**
die Basisstation (BS) dazu ausgelegt ist, die Scheduling-Bewilligung (SG) durch Verschlüsseln einer Relaisknotenkennung (RNid) zur Identifizierung des Relaisknotens (RN) zusammen mit der Benutzerendgerätkennung (UEid) in eine Prüffolge, vorzugsweise eine zyklische Redundanzprüffolge (CRC1), für Nutzdaten (PL) der Scheduling-Bewilligung (SG) zu erzeugen, wobei das Verschlüsseln vorzugsweise durch Verwürfelung der Prüffolge (CRC1) erfolgt.

2. Basisstation nach Anspruch 1, wobei die Relaisknotenkennung (RNid) und die Benutzerendgerätkennung (UEid) in unterschiedliche Bits der Prüffolge (CRC1) verschlüsselt sind.

3. Basisstation nach Anspruch 1, wobei die Scheduling-Bewilligung (SG1 bis SGN) in einen Transportblock (TBL), welcher Datenpakete (DP1 bis DPN) enthält, die über einen Transportkanal (TC) an mindestens ein Benutzerendgerät (UE1, UE2) übertragen werden sollen, oder in einen Datensteuerinformations- bzw. DCI-Block einer Scheduling-Bewilligung (SG), der über einen Signalisierungskanal (SC) an den Relaisknoten (RN) übertragen werden sollen, eingefügt wird.

4. Basisstation nach einem beliebigen der vorstehenden Ansprüche, wobei eine Länge der in die Scheduling-Bewilligung (SG, SG1 bis SGN) eingefügten Benutzerendgerätkennung (UEid) in Abhängigkeit von einer maximalen Anzahl von von dem Relaisknoten (RN) bedienten Benutzerendgeräten (UE1, UE2) gewählt wird.

5. Relaisknoten (RN) zur Weiterleitung von von einer Basisstation (BS) einer Kommunikationszelle (1) empfangenen Datenpaketen (DP) an ein in der Kommunikationszelle (1) angeordnetes Benutzerendgerät (UE1, UE2), wobei der Relaisknoten (RN) dazu ausgelegt ist, eine Benutzerendgerätkennung (UEid), die für das Benutzerendgerät (UE1), an welches die Datenpakete (DP) weitergeleitet werden sollen, indikativ ist, aus einer von der Basisstation (BS) empfangenen Scheduling-Bewilligung (SG, SG1 bis SGN) abzuleiten,
**dadurch gekennzeichnet, dass**
die Benutzerendgerätkennung (UEid) in einer empfangenen Prüffolge, vorzugsweise einer zyklische Redundanzprüffolge (CRC1 von Nutzlasten (PL) der empfangenen Scheduling-Bewilligung (SG), zusammen mit einer Relaisknotenkennung (RNid) zur Identifizierung des Relaisknotens (RN), enthalten ist, und dass der Relaisknoten (RN) weiterhin für das Durchführen der folgenden Schritte ausgelegt ist:
a) Erzeugen einer weiteren Prüffolge, vorzugsweise einer CRC-Folge (CRC2), aus den Nutzdaten (PL) der empfangenen Scheduling-Bewilligung (SG),
b) Verschlüsseln einer Relaisknotenkennung (RNid) des Relaisknotens (RN) und einer Benutzerendgerätkennung (UEid), ausgewählt aus einer Vielzahl von mit dem Relaisknoten (RN) assoziierten Benutzerendgerätkennungen (UEidl bis UEidN), in die weitere Prüffolge (CRC2), vorzugsweise durch Verwürfeln der weiteren Prüffolge (CRC2), und
c) Vergleichen der verschlüsselten weiteren Prüffolge (CRC2) mit der empfangenen Prüffolge (CRC1), um zu entscheiden, ob das Datenpaket (DP) an das mit der ausgewählten Benutzerendgerätkennung (UEid) assoziierte Benutzerendgerät (UE1) weitergeleitet werden soll.

6. Kommunikationszelle (1), umfassend:
Eine Basisstation (BS) gemäß einem beliebigen der Ansprüche 1 bis 4, und
mindestens einen Relaisknoten (RN) gemäß Anspruch 5.

7. Kommunikationszelle (1) nach Anspruch 6, weiterhin umfassend ein Benutzerendgerät (UE1), welches von dem Relaisknoten (RN) bedient wird, wobei die Kommunikationszelle (1) dazu ausgelegt ist:
Ein Datenpaket (DP) von der Basisstation (BS) an den Relaisknoten (RN) und gleichzeitig an das Benutzerendgerät (UE1) zu übertragen, und
das Datenpaket (DP) von dem Relaisknoten (RN) an das Benutzerendgerät (UE1) weiterzusenden.

8. Kommunikationszelle (1) nach Anspruch 7, wobei das Benutzerendgerät (UE1) den Empfang des von der Basisstation (BS) empfangenen Datenpakets nicht bestätigt.

9. Kommunikationszelle (1) nach Anspruch 7, wobei sowohl das Benutzerendgerät (UE1) als auch der Relaisknoten (RN) den Empfang des Datenpakets (DP) simultan unter Verwendung von unterschiedlichen Uplink-Steuerkanalressourcen bestätigen.

10. Kommunikationszelle (1) nach Anspruch 9, wobei die Uplink-Steuerkanalressourcen auf ein Steuerkanalelement für die Übertragung von Downlink-Bewilligungen markiert werden, wobei die Markierungen der Uplink-Steuerkanalressourcen auf den Steuerkanalelementen, welche von dem Relaisknoten (RN) und dem Benutzerendgerät (UE1) ausgeführt werden, unterschiedlich sind.

11. Kommunikationszelle nach einem beliebigen der Ansprüche 6 bis 10, weiterhin für die Übertragung einer zusätzlichen Scheduling-Bewilligung (SG_{UE1}) von der Basisstation (BS) an das Benutzerendgerät (UE1), vorzugsweise mit der Angabe, dass der Relaisknoten (RN) eine Weitersendung des Datenpakets (DP) vornehmen wird, ausgelegt.

12. Kommunikationsnetzwerk (2) mit mindestens einer Kommunikationszelle (1) gemäß einem beliebigen der Ansprüche 6 bis 11.

## Revendications

1. Station de base (BS) pour une cellule de communications (1) d'un réseau sans fil (2), la station de base (BS) étant adaptée pour générer une autorisation d'ordonnancement (SG, SG1 à SGN) à transporter de la station de base (BS) à un noeud relais (RN) de la cellule de communications (1),
la station de base (BS) étant en outre adaptée pour inclure un identifiant d'équipement d'utilisateur (UEid, UEid1 à UEidN) dans l'autorisation d'ordonnancement (SG, SG1 à SGN), l'identifiant d'équipement d'utilisateur (UEid, UEid1 à UEidN) désignant un équipement d'utilisateur (UE1, UE2) vers lequel il convient de transférer par le noeud relais (RN) un paquet de données (DP) à transmettre par la station de base (BS)
**caractérisée en ce que**
la station de base (BS) est adaptée pour générer l'autorisation d'ordonnancement (SG) en codant un identifiant de noeud relais (RNid) pour identifier le noeud relais (RN) conjointement avec l'identifiant d'équipement d'utilisateur (UEid) dans une séquence de contrôle, de préférence une séquence de contrôle par redondance cyclique (CRC1), pour une charge utile (PL) de l'autorisation d'ordonnancement (SG), le codage étant de préférence réalisé par brouillage de la séquence de contrôle (CRC1).

2. Station de base selon la revendication 1, avec laquelle l'identifiant de noeud relais (RNid) et l'identifiant d'équipement d'utilisateur (UEid) sont codés dans des bits différents de la séquence de contrôle (CRC1).

3. Station de base selon la revendication 1, avec laquelle l'autorisation d'ordonnancement (SG1 à SGN) est incluse dans un bloc de transport (TBL) contenant des paquets de données (DP1 à DPN) à transférer à au moins un équipement d'utilisateur (UE1, UE2) sur un canal de transport (TC) ou dans un bloc d'informations de commande de données (DCI) d'une autorisation d'ordonnancement (SG) à transmettre au noeud relais (RN) sur un canal de signalisation (SC).

4. Station de base selon l'une quelconque des revendications précédentes, avec laquelle une longueur de l'identifiant d'équipement d'utilisateur (UEid) inclus dans l'autorisation d'ordonnancement (SG, SG1 à SGN) est choisie en fonction d'un nombre maximum d'équipements d'utilisateur (UE1, UE2) desservis par le noeud relais (RN).

5. Noeud relais (RN) pour transférer des paquets de données (DP) reçus de la part d'une station de base (BS) d'une cellule de communications (1) à un équipement d'utilisateur (UE1, UE2) disposé dans la cellule de communications (1), le noeud relais (RN) étant adapté pour dériver un identifiant d'équipement d'utilisateur (UEid) désignant l'équipement d'utilisateur (UE1) auquel il convient de transférer les paquets de données (DP) à partir d'une autorisation d'ordonnancement (SG, SG1 à SGN) reçue de la part de la station de base (BS),
**caractérisé en ce que**
l'identifiant d'équipement d'utilisateur (UEid) est compris dans une séquence de contrôle reçue, de préférence une séquence de contrôle par redondance cyclique (CRC1), d'une charge utile (PL) de l'autorisation d'ordonnancement (SG) reçue conjointement avec un identifiant de noeud relais (RNid) pour identifier le noeud relais (RN), et **en ce que** le noeud relais (RN) est en outre adapté pour :
a) générer une séquence de contrôle supplémentaire, de préférence une séquence CRC (CRC2), à partir de la charge utile (PL) de l'autorisation d'ordonnancement (SG) reçue,
b) coder un identifiant de noeud relais (RNid) du noeud relais (RN) et un identifiant d'équipement d'utilisateur (UEid) sélectionné parmi une pluralité d'identifiants d'équipement d'utilisateur (UEid1 à UEidN) associés au noeud relais (RN) dans la séquence de contrôle supplémentaire (CRC2), de préférence en brouillant la séquence de contrôle supplémentaire (CRC2), et
c) comparer la séquence de contrôle supplémentaire (CRC2) codée avec la séquence de contrôle (CRC1) reçue pour décider si le paquet de données (DP) doit être transféré à l'équipement d'utilisateur (UE1) associé à l'identifiant d'équipement d'utilisateur (UEid) sélectionné.

6. Cellule de communications (1), comprenant :
une station de base (BS) selon l'une quelconque des revendications 1 à 4, et
au moins un noeud relais (RN) selon la revendication 5.

7. Cellule de communications (1) selon la revendication 6, comprenant en outre un équipement d'utilisateur (UE1) desservi par le noeud relais (RN), la cellule de communications (1) étant adaptée pour :
transmission simultanée d'un paquet de données (DP) de la station de base (BS) au noeud relais (RN) et à l'équipement d'utilisateur (UE1), et
retransmission du paquet de données (DP) du noeud relais (RN) à l'équipement d'utilisateur (UE1).

8. Cellule de communications selon la revendication 7, avec laquelle l'équipement d'utilisateur (UE1) ne confirme pas la réception du paquet de données (DP) reçu de la part de la station de base (BS).

9. Cellule de communications selon la revendication 7, avec laquelle l'équipement d'utilisateur (UE1) et le noeud relais (RN) confirment tous deux simultanément la réception du paquet de données (DP) en utilisant des ressources différentes de canal de commande de la liaison montante.

10. Cellule de communications selon la revendication 9, avec laquelle les ressources de canal de commande de la liaison montante sont marquées à un élément de canal de commande pour transmettre des autorisations de liaison descendante, le marquage des ressources de canal de commande de la liaison montante à l'élément de canal de commande qui est effectué par le noeud relais (RN) et par l'équipement d'utilisateur (UE1) étant différent.

11. Cellule de communications selon l'une quelconque des revendications 6 à 10, adapté en outre pour : transmettre une autorisation d'ordonnancement supplémentaire (SG_{UE1}) de la station de base (BS) à l'équipement d'utilisateur (UE1), de préférence en indiquant que le noeud relais (RN) effectuera une retransmission du paquet de données (DP).

12. Réseau de communications (2), comprenant au moins une cellule de communications (1) selon l'une quelconque des revendications 6 à 11.
